# EUROPEAN PATENT SPECIFICATION

(11) **EP 1 982 961 B1**
(45) Date of publication and mention of the grant of the patent: **08.12.2010**
(21) Application number: 08151004.2
(22) Date of filing: 04.02.2008
(51) Int. Cl.: C02F 1/76

(54) **Disinfectant device and process**
Vorrichtung und Verfahren zum Desinfizieren
Dispositif et procédé désinfectants

(30) Priority: 18.04.2007 IN MU07512007
(43) Date of publication of application: 22.10.2008
(73) Proprietor: Unilever N.V., 3013 AL Rotterdam (NL); Unilever PLC, London EC4Y 0DY (GB)
(72) Inventor: Behal, Vidur, 400 099, Andheri East, Mumbai (IN); Jambekar, Girish, Umakant, 400 099, Andheri East, Mumbai (IN); Mukherjee, Nikhileshwar, 400 099, Andheri East, Mumbai (IN); Vadhyar, Jayashree, Anantharam, 400 099, Andheri East, Mumbai (IN)
(74) Representative: Rosen Jacobson, Frans Lucas M.

(56) References cited:
- WO-A-2005/095284
- US-A- 939 424
- US-A- 2 680 715
- US-A- 3 873 685
- US-A- 5 711 211
- US-A1- 2003 209 483
- US-A1- 2003 222 013
- US-A1- 2004 022 676
- US-A1- 2004 211 731
- US-A1- 2005 121 387
- US-B1- 6 447 722
- M.J. ALLEN ET AL: "Heterotrophic plate count bacteria?what is their significance in drinking water ?" INTERNATIONAL JOURNAL OF FOOD MICROBIOLOGY, vol. 92, 2004, pages 265-274, XP002477609 ELSEVIER

## Description

### FIELD OF THE INVENTION

The present invention relates to a disinfectant unit for water stored in a container. It is particularly useful for maintaining purified water sanitized during storage.

### BACKGROUND AND PRIOR ART

A large population of people in the world live in countries where there is a severe shortage of hygienic potable water. Various types of water purification systems like those that utilize UV radiation, halogenated resins, reverse osmosis, etc are used to purify water. Many resort to boiling of water. A large number of chemical methods of purifying water have been known and used at municipal, local and domestic levels. Some of the disinfection agents such as iodine, bromine, chlorine or ozone are used to reduce the concentration of microorganisms like bacteria and viruses.

Many of the commercially available water purification devices aim at providing water that meet the standards set by EPA. EPA Specifies that water from any unknown origin can be rendered microbiologically safe to drink if removal of log 6 of bacteria, log 4 of virus and log 3 of cysts is attained. Thus a generally accepted removal criteria for bacteria, virus and cysts are log 6, log 4 and log 3 removal respectively.

After purification of water, the water is stored for various periods of time before consumption. Heterotrophic plate count bacteria (HPC Bacteria) are widely prevalent in air, soil, foods, and in all sources of water and are generally present through-out the environment. HPC bacteria developed in water that had been treated by an in-line device such as a carbon filter or softener, in water-dispensing devices and in bottled water and indeed in all water that has suitable nutrients. These organisms cause problems of aesthetic nature in stored water. They form slimy films on water making it unsuitable for drinking. The USEPA has an informal standard of 500 colony forming units of HPC bacteria/ml.

The issues that are relevant with regard to HPC bacteria are relationship between HPC in drinking water and health risks for general public. HPC bacteria can be an indirect indicator of pathogens of concern in drinking water and thus may play a role in assessing the functioning of water purifiers and aesthetic acceptability of water if contaminated with HPC bacteria.

There have been some attempts to reduce and prevent these bacteria from growing in stored purified water.

US20030222013, (Yang et al.,), discloses a drinking water filter capable of inhibiting retrograde bacterial growth at the user outlet with the combination of a non-carbonaceous submicron filter element immediately upstream of the system outlet and a copper orifice element in the outlet downstream of the filter element.

US2005121387, (Alticor Inc), discloses that copper particles in the carbon filter and the combination of silver treated carbon and copper particles, inhibit growth of bacteria in the filter and the water.

US2680715, (R.W. Cook, 1954) discloses a chlorinator, by which a predetermined amount of chlorine is automatically supplied to a water line. However, this does not disclose the release of chlorine by a halogen source held inside the container, but it is by an external chlorine tank. W02005095284, (Unilever), discloses a gravity fed water purification system and mentions that the biocide is a chemical that delivers active chlorine to the water. In this device the various parts are in fluid communication with each other and as the water flows through the unit the released biocide is carried along. It does not disclose the benefits of having chlorine released by the halogen source which does not come in contact with the water to be sanitised.

M.J. Allen et al (Int. J. Of Food Microbiology, 92, 265-274, 2004), relates to heterotrophic plate count (HPC) bacteria and their significance in drinking water. The document does define HPC bacteria, but it does not disclose the the benefits of having chlorine released by the halogen source which does not come in contact with the water to be sanitised.

A drawback of these methods is that the freshly purified water is contaminated with harmful chemicals, such as heavy metals.

The prior art refers to controlling HPC bacteria in the filter and during purification but does not provide a disinfectant mechanism for storing water without getting it further contaminated. According to the present invention it is now possible to maintain water sanitised during prolonged storage. It is not linked to the device used for purifying the water that is stored.

It is another concern that freshly purified water, e.g. water stored in the storage tank of a water purification device, is contaminated with HPC bacteria, present in air in the head space of the storage tank and/or bacteria left on the wall of the storage tank by a user (e.g. after cleaning).

It is an object of the invention to maintain water held in a container sanitised during storage.
It is another object to achieve this without the addition of substantial amounts of chemicals to the water.

It is another object of the invention to maintain purified water sanitised and prevent the growth of HPC bacteria during the time gap between the purification process and consumption.

It is yet another object of the present invention to ensure reduction of microbial counts in slightly impure water.

It is yet another object of the present invention to provide a disinfectant means in gravity fed water purification systems to prevent the growth of HPC bacteria during the time gap between the purification process and consumption.

### SUMMARY OF THE INVENTION

Accordingly, the present invention provides a process for releasing a halogen source to the head space of a water storage container, the water storage container comprising a holder provided with a vent positioned inside said container, the process comprising the steps of:
- adding a halogen source capable of releasing a gaseous disinfectant to the holder;
- leaving the gaseous disinfectant in the head space of the container;
and wherein the holder is positioned such that said halogen source is not in contact with the water.

According to another aspect of the present invention there is provided a disinfectant unit for water stored in a container, comprising a holder and a halogen source, said halogen source releasing a gaseous disinfectant into the head space of the container through a vent provided in said holder wherein the disinfectant unit is positioned such that said halogen source is not in contact with the water, as further specified in claim 2.

The present invention also provides the use of a halogen source, as specified in claim 10.

It is particularly preferred that the halogen source is selected from a source of chlorine, bromine or iodine and in particular it is solid source of these materials.

### DETAILED DESCRIPTION OF THE INVENTION

The present invention relates to a disinfectant unit for maintaining water held in a container sanitised by releasing gaseous disinfectant into the head space of the container while ensuring the disinfectant is spatially separated from the water to be sanitised.

Thus according to the present invention it is possible to maintain water held in a container sanitised during storage by a process whereby gaseous disinfectant is released into the head space of the container. According to the invention the halogen source of the disinfection unit is not in contact with the stored water. The process is achieved by placing the halogen source in a holder, said source capable of releasing a gaseous disinfectant in to the head space of the container wherein the disinfection unit is so positioned as to ensure that the halogen source is not in contact with the stored water.

Any water that has to be stored for a given period of time can be kept sanitised by the disinfection unit and by the process described in the present invention. It is particularly useful to keep purified drinking water that is stored sanitised because generally there will be a time gap between the purification process and consumption.

Gravity fed water purification systems are gaining popularity especially in places where there is scarcity of power and running water supply. In these water purification systems also it is quite possible that there is a time gap between the purification process and consumption. In such cases, the disinfection unit and the process according to the invention is useful in maintaining the stored water free of contamination by bacteria especially the HPC bacteria which are so universally prevalent in air and on other substrates.

The disinfectant unit is preferably fitted to a gravity fed water purification device comprising a filtration unit adapted to separate particulate and suspended solids from the input water, which is in fluid communication with a chemical dispensing unit such that flow rate of water exiting the filtration unit is controlled by a flow control means before the water encounters a biocide dispensed by the chemical dispensing unit, the water thereafter being retained in a retention chamber for a predetermined period of time before exiting the water purification system through a scavenger means adapted to separate the dispensed biocide from the exit water. It is preferable to fit the disinfection unit in such a way that the halogen source capable of releasing a gaseous disinfectant into the head space of the container where the water that exits the scavenger means is collected.

### Halogen source:

The halogen source is held in a holder provided with a vent to enable the release of the gaseous disinfectant. The halogen source is selected from a source of chlorine, bromine or iodine. It is preferred to use a source of chlorine as the halogen source. It is preferred that the halogen source is solid. The solid form is preferably powder, granule, tablet or a block. It is particularly preferred that the halogen source is provided as a tablet or a block.

The size of the halogen source is determined by the size of the container and the volume of water that has to be sanitised. It is preferred that the weight of the halogen source is in the range from 2 - 20 g, more preferably 3-12 g and the most preferred range is 5-10 g.

The source of chlorine is preferably trichloroisocyanuric acid or selected from potassium dischloroisocyanurate, sodium dichloroisocyanurate, chlorinated trisodium phosphate, calcium hypochlorite, lithium hypochlorite, monochloramine, dichloramine, [(monotrichloro)-tetra(monopotassium dichloro)] pentaisocyanurate, 1,3 dichloro-5,5-dimethylidanotone, paratoluene sulfodichloroamide, thrichloromelamine, N-chloramine, N-chlorosuccinimide, N,N'-dichloroazodicarbonamide, N-chloroacetyl-urea, N,N-dichloroazodicarbonamide, N-chloroacetyl-urea, N,N-dichlorbiurile, chlorinated dicyandiamide or a mixture thereof.

More preferably, the source of chlorine is trichloroisocyanuric acid.

The concentration of the gaseous disinfectant released from the halogen source in the head space is preferably in the range 0.5 to 5 ppm, more preferably 1 to 3 ppm and most preferably 1 to 2 ppm. It is preferred that the container in which the water is stored is kept covered by a lid to optimise the benefits of the gaseous disinfectant. It is particularly preferred that the container in which the water is stored is a substantially closed system.

It is preferred that the halogen source is not in direct contact with the water and releases the gaseous disinfectant to the head space of the storage container only. However, it is not excluded from the scope of the invention that some of the gaseous disinfectant is taken up by the water. Gaseous disinfectant uptake by the water has the further benefit that small concentrations of bacteria, such as HPC bacteria, may be effectively killed as well as contamination of the water via the head space being prevented.

### Disinfection Unit:

The disinfection unit has a holder housing a halogen source and is provided with a vent to allow the passage of the gaseous disinfectant into the head space of the container in which the water is stored. The disinfectant unit is held in the container in such a way that the halogen source is not in direct contact with the water to be kept sanitised.

The holder is of any suitable geometric shape and size and designed so as to accommodate it conveniently in the water storage container. The size of the holder depends on the volume of water and the size of the container that has to be sanitised.

The holder housing the halogen source is preferably a hollow cylinder. The holder preferably comprises a base and sidewalls and the vent is provided on the base or sidewalls. It is convenient to provide the vent as slits or holes on the sidewalls. The material used for the construction of the holder is any suitable material that does not chemically react substantially with the halogen source and is selected from polymers used for halogen source storage. The more preferable materials are acrylonitrile butadiene styrene, styrene acrylonitrile or high density polyethylene.

The holder can be fitted on to a container with water which is stationary or in motion.

The invention will now be illustrated by the following non-limiting drawing and examples.

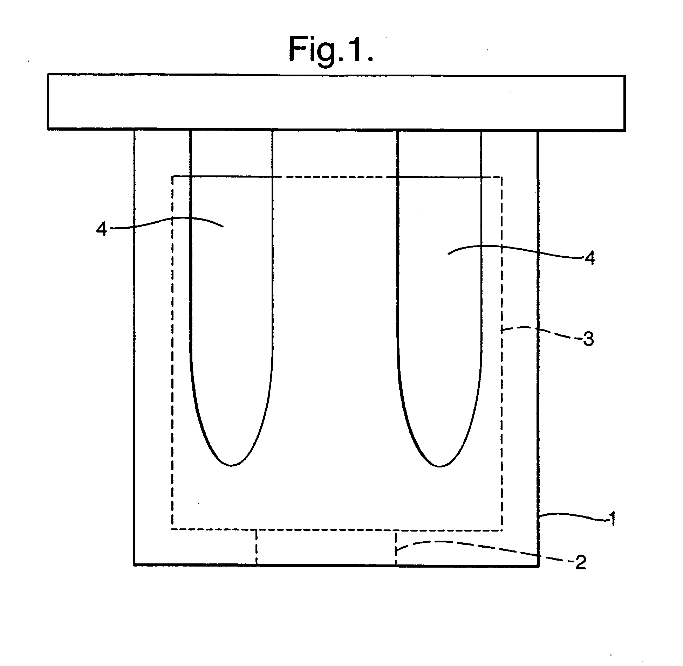

Figure 1, shows a perspective view of the disinfection unit which can be fixed inside a container used for storage of water. The disinfection unit has a holder (1), within the hollow space of the holder there is provided an inner support (2) for holding a block of halogen source (3). The holder is provided with longitudinal slits which act as vents (4) to allow the passage of the gaseous disinfectant into the head space of the container. This disinfection unit can be fitted to any part of the container or the lid of the container in such a way that the halogen source is not in direct contact with the water stored in the container.

### EXAMPLES

### i. Growth of HPC bacteria in purified water:

Three litres of water purified by various methods described below were stored in closed containers for 0, 2 and 7 days at 25°C. These containers were not air tight containers. The methods used for purifying water in the various experiments were as follows:

| | |
|---|---|
| Example 1 : | Boiling for 20 minutes |
| Example 2 : | Autoclaving |
| Example 3 : | Municipal source which is chlorinated. |
| Example 4 : | Commercially available bottled water |
| Example 5 : | Autoclaved water kept in a sterile beaker under sterile air condition of a laminar air flow with 0.22 micron filter |

The growth of HPC bacteria was determined by standard microbial plating on R2A agar medium obtained from DIFCO at various time periods. The data is presented in Table 1.

**Table 1**

| **Samples** | **HPC Counts, CFU/ml** | | |
|---|---|---|---|
| | 0 day | 2 day | 7 day |
| Example 1 | 0 | 0 | 10³ |
| Example 2 | 0 | 0 | 55 |
| Example 3 | 0 | 0 | 10² |
| Example 4 | 300 | 10³ | 10⁴ |
| Example 5 | 0 | 0 | 0 **(Sterile till ~ 22 days)** |

The data presented in Table 1 show that water purified to various levels by various means get contaminated considerably when stored and exposed to external environment. This also indicates atmospheric air becomes major source of HPC contamination in stored water. However, when stored under specific sterile conditions they remain sterile up to about 22 days.

### ii. Effect of a halogen source to disinfect stored water:

Water was purified using a standard water purification device and three litres of this water was used for each of the following study. Purified water was maintained as control and compared with water that was spiked with HPC bacteria at 10⁴ CFU/ml. The control and spiked water was kept covered with a lid in a beaker and stored in a closed condition for 1, 5 and 10 days without exposing to any gaseous disinfectant. In a similar experiment a 2.5g tablet of trichloroisocyanuric acid (TCCA) was placed in a disinfection unit as described in Fig.1, which was attached to the bottom surface of the lid of the container having water. The various samples tested were as follows:

| | |
|---|---|
| Example 6 : | Purified water without spiking |
| Example 7 : | Purified water spiked with 10⁴ CFU/ml |
| Example 8 : | Purified water of Example 6 provided with a disinfectant unit according to the invention having 2.5g of TCCA. |
| Example 9 : | Purified water of Example 7 provided with a disinfectant unit according to the invention having 2.5g of TCCA. |

Water samples were analysed for microbial contamination at the end of 1, 5 and 10 days by standard method described in Example 1 and the data is presented in table 2.

**Table 2**

| **Sample** | **Counts, CFU/ml** | | |
|---|---|---|---|
| | **0 day** | **5 day** | **7 day** |
| Example 6 | 0 | 348 | 4.2 X 10³ |
| Example 7 | 110 X 10⁴ | 2 X 10⁵ | 3X10⁶ |
| Example 8 | 0 | 0 | 0 |
| Example 9 | 110 X 10⁴ | 0 | 0 |

The data presented in Table 2 show that the gaseous disinfectant released into the head space of the container in which water was stored was effective in controlling the growth of the HPC bacteria. It is also apparent that the disinfectant unit of the invention apart from maintaining the sterile status of purified water also ensures reduction of microbes in slightly impure water.

## Claims

1. A process for releasing a halogen source to the head space of a water storage container, the water storage container comprising a holder provided with a vent, positioned inside said container, the process comprising the steps of:
a. adding a halogen source releasing a gaseous disinfectant to the holder;
b. leaving the gaseous disinfectant in the head space of the container;
and wherein the holder is positioned such that said halogen source is not in contact with the water.

2. A disinfectant unit for maintaining water stored in a container sanitized, comprising a holder housing a halogen source, said halogen source releasing a gaseous disinfectant into the head space of the container through a vent provided in said holder, and said holder being positioned inside said container, wherein the disinfectant unit is positioned such that said halogen source is not in contact with the water.

3. A disinfectant unit as claimed in claim 2 wherein the halogen source is source of chlorine.

4. A disinfectant unit as claimed in claim 3 wherein the source of chlorine is trichloroisocyanuric acid or selected from potassium dischloroisocyanurate, sodium dichloroisocyanurate, chlorinated trisodium phosphate, calcium hypochlorite, lithium hypochlorite, monochloramine, dichloramine, [(monotrichloro)-tetra(monopotassium dichloro)] pentaisocyanurate, 1,3 dichloro-5,5-dimethylidanotone, paratoluene sulfodichloroamide, thrichloromelamine, N-chloramine, N-chlorosuccinimide, N,N'-dichloroazodicarbonamide, N-chloroacetyl-urea, N,N-dichloroazodicarbonamide, N-chloroacetyl-urea, N,N-dichlorbiurile, chlorinated dicyandiamide or a mixture thereof.

5. A disinfectant unit as claimed in any one of the preceding claims wherein the halogen source is solid.

6. A disinfectant unit as claimed in as claimed in claim 4 wherein the halogen source is in the form of a tablet or a block.

7. A disinfectant unit as claimed in any one of the preceding claims wherein the water is purified water suitable for drinking and said disinfectant unit maintains said water sanitised.

8. A disinfectant unit as claimed in claim 7 wherein said water is purified using gravity fed water purification system.

9. A disinfectant unit as claimed in any one of the preceding claims fitted to a gravity fed water purification device comprising a filtration unit adapted to separate particulate and soluble material from the input water, which is in fluid communication with a chemical dispensing unit such that flow rate of water exiting the filtration unit is controlled by a flow control means before the water encounters a biocide dispensed by the chemical dispensing unit, the water thereafter being retained in a retention chamber for a predetermined period of time before exiting the water purification system into said container through a scavenger means adapted to separate the dispensed biocide from the exit water.

10. Use of a halogen source releasing a gaseous disinfectant to the headspace of a water container for controlling the growth of HPC bacteria in the water in said container, wherein the halogen source is trichloroisocyanuric acid or selected from the group consisting of potassium dischloroisocyanurate, sodium dichloroisocyanurate, chlorinated trisodium phosphate, calcium hypochlorite, lithium hypochlorite, monochloramine, dichloramine, [(monotrichloro)-tetra(monopotassium dichloro)] pentaisocyanurate, 1,3 dichloro-5,5-dimethylidanotone, paratoluene sulfodichloroamide, thrichloromelamine, N-chloramine, N-chlorosuccinimide, N,N'-dichloroazodicarbonamide, N-chloroacetyl-urea, N,N-dichloroazodicarbonamide, N-chloroacetyl-urea, N,N-dichlorbiurile, chlorinated dicyandiamide or a mixture thereof.

11. Use according to claim 10, wherein the halogen source is trichloroisocyanuric acid.

## Patentansprüche

1. Verfahren zum Freisetzen einer Halogenquelle in den Kopfraum eines Wasserspeichertanks, wobei der Wasserspeichertank einen mit einer Abzugsöffnung versehenen Behälter aufweist, der sich im Inneren des Tanks befindet, wobei das Verfahren die folgenden Schritte aufweist:
a. Zugeben einer Halogenquelle, die ein gasförmiges Desinfektionsmittel freisetzt, in den Behälter;
b. Belassen des gasförmigen Desinfektionsmittels im Kopfraum des Tanks;
und wobei der Behälter so angeordnet ist, dass die Halogenquelle nicht mit dem Wasser in Kontakt steht.

2. Desinfektionsmitteleinheit, damit in einem Tank gespeichertes Wasser desinfiziert bleibt, die einen Behälter aufweist, der eine Halogenquelle enthält, wobei die Halogenquelle ein gasförmiges Desinfektionsmittel durch eine in dem Behälter vorgesehene Abzugsöffnung in den Kopfraum des Tanks freisetzt, und wobei sich der Behälter im Inneren des Tanks befindet, wobei die Desinfektionsmitteleinheit so angeordnet ist, dass die Halogenquelle nicht mit dem Wasser in Kontakt steht.

3. Desinfektionsmitteleinheit nach Anspruch 2, wobei die Halogenquelle eine Chlorquelle ist.

4. Desinfektionsmitteleinheit nach Anspruch 3, wobei die Chlorquelle Trichlorisocyanursäure ist oder ausgewählt ist aus Kaliumdichlorisocyanurat, Natriumdichlorisocyanurat, chloriertem Trinatriumphosphat, Calciumhypochlorit, Lithiumhypochlorit, Monochloramin, Dichloramin, [(Monotrichlor)-tetra(monokaliumdichlor)]pentaisocyanurat, 1,3-Dichlor-5,5-dimethylidanoton, p-Toluolsulfodichloramid, Trichlormelamin, N-Chloramin, N-Chlorsuccinimid, N,N'-Dichlorazodicarbonamid, N-Chloracetylharnstoff, N,N-Dichlorazodicarbonamid, N-Chloracetylharnstoff, N,N-Dichlorbiuril, chloriertem Dicyandiamid oder Gemischen davon.

5. Desinfektionsmitteleinheit nach einem der vorstehenden Ansprüche, wobei die Halogenquelle fest ist.

6. Desinfektionsmitteleinheit nach Anspruch 4, wobei die Halogenquelle in Form einer Tablette oder eines Blocks vorliegt.

7. Desinfektionsmitteleinheit nach einem der vorstehenden Ansprüche,
wobei das Wasser gereinigtes Wasser ist, das zum Trinken geeignet ist, und die Desinfektionsmitteleinheit das Wasser im desinfizierten Zustand hält.

8. Desinfektionsmitteleinheit nach Anspruch 7, wobei das Wasser unter Verwendung eines Wasserreinigungssystems mit Schwerkraftzuführung gereinigt ist.

9. Desinfektionsmitteleinheit nach einem der vorstehenden Ansprüche,
das an einer Wasserreinigungsvorrichtung mit Schwerkraftzuführung angebracht ist, die eine Filtrationseinheit aufweist, die dazu dient, partikelförmiges und lösliches Material vom Wasserzulauf abzutrennen, die in Fluidverbindung mit einer Chemikalien verteilenden Einheit steht, so dass die Durchflussgeschwindigkeit des die Filtrationseinheit verlassenden Wassers von einer Durchflusssteuerungseinrichtung gesteuert wird, bevor das Wasser auf ein Biozid trifft, das von der Chemikalien verteilenden Einheit freigesetzt wird, wobei das Wasser dann für einen vorbestimmten Zeitraum in einer Rückhaltekammer zurückgehalten wird, ehe es durch eine Reinigungsmitteleinrichtung, die dazu dient, das verteilte Biozid vom Wasserablauf abzutrennen, aus dem Wasserreinigungssystem in den Tank gelangt.

10. Verwendung einer Halogenquelle, die ein gasförmiges Desinfektionsmittel in den Kopfraum eines Wassertanks freisetzt, zum Steuern des Wachstums von HPC-Bakterien im Wasser in diesem Tank, wobei die Halogenquelle Trichlorisocyanursäure ist oder aus der Gruppe ausgewählt ist, bestehend aus Kaliumdichlorisocyanurat, Natriumdichlorisocyanurat, chloriertem Trinatriumphosphat, Calciumhypochlorit, Lithiumhypochlorit, Monochloramin, Dichloramin, [(Monotrichlor)-tetra(monokaliumdichlor)]pentaisocyanurat, 1,3-Dichlor-5,5-dimethylidanoton, p-Toluolsulfodichloramid, Trichlormelamin, N-Chloramin, N-Chlorsuccinimid, N,N'-Dichlorazodicarbonamid, N-Chloracetylharnstoff, N,N-Dichlorazodicarbonamid, N-Chloracetylhamstoff, N,N-Dichlorbiuril, chloriertem Dicyandiamid oder Gemischen davon.

11. Verwendung nach Anspruch 10, wobei die Halogenquelle Trichlorisocyanursäure ist.

## Revendications

1. Procédé de libération d'une source d'halogène dans l'espace de tête d'un réservoir de stockage d'eau, le réservoir de stockage d'eau comprenant une cuve pourvue d'un orifice d'évacuation, positionnée à l'intérieur dudit réservoir, le procédé comprenant les étapes consistant à :
a. ajouter une source d'halogène libérant un désinfectant gazeux dans la cuve ;
b. laisser le désinfectant gazeux dans l'espace de tête du réservoir ;
et dans lequel la cuve est positionnée de manière à ce que ladite source d'halogène ne soit pas en contact avec l'eau.

2. Unité de désinfection pour conserver de l'eau stockée dans un réservoir aseptisé, comprenant une cuve logeant une source d'halogène, ladite source d'halogène libérant un désinfectant gazeux dans l'espace de tête du réservoir par l'intermédiaire d'un orifice d'évacuation équipant ladite cuve, et ladite cuve étant positionnée à l'intérieur dudit réservoir, dans laquelle l'unité de désinfection est positionnée de manière à ce que ladite source d'halogène ne soit pas en contact avec l'eau.

3. Unité de désinfection selon la revendication 2, dans laquelle la source d'halogène est une source de chlore.

4. Unité de désinfection selon la revendication 3, dans laquelle la source de chlore est l'acide trichloroisocyanurique ou est choisie parmi le dichloroisocyanurate de potassium, le dichloroisocyanurate de sodium, le phosphate trisodique chloré, l'hypochlorite de calcium, l'hypochlorite de lithium, la monochloramine, la dichloramine, le pentaiso-cyanurate de [(monotrichloro)-tétra-(monopotassium dichloro)], la 1,3-dichloro-5,5-diméthylidanotone, le paratoluène sulfodichloroamide, la trichloromélamine, la N-chloramine, le N-chlorosuccinimide, le N,N'-dichloroazodicarbonamide, la N-chloroacétylurée, le N,N-dichloroazodicarbonamide, la N-chloroacétylurée, le N,N-dichlorbiurile, le dicyandiamide chloré ou l'un de leurs mélanges.

5. Unité de désinfection selon l'une quelconque des revendications précédentes, dans laquelle la source d'halogène est solide.

6. Unité de désinfection selon la revendication 4, dans laquelle la source d'halogène est sous la forme d'un comprimé ou d'un bloc.

7. Unité de désinfection selon l'une quelconque des revendications précédentes, dans laquelle l'eau est de l'eau purifiée appropriée pour être bue et ladite unité de désinfection conserve ladite eau désinfectée.

8. Unité de désinfection selon la revendication 7, dans laquelle ladite eau est purifiée au moyen d'un système de purification d'eau par gravité.

9. Unité de désinfection selon l'une quelconque des revendications précédentes, équipée d'un dispositif de purification d'eau par gravité comprenant une unité de filtration adaptée pour séparer la matière particulaire et la matière soluble de l'eau entrante, lequel est en communication de fluide avec une unité de distribution de produit chimique, de sorte que le débit d'eau sortant de l'unité filtration est régulé par un moyen de régulation du débit avant que l'eau rencontre un biocide distribué par l'unité de distribution de produit chimique, l'eau étant ensuite retenue dans une chambre de rétention pendant une période de temps prédéterminée avant de sortir du système de purification d'eau dans ledit réservoir par l'intermédiaire d'un moyen d'épuration adapté pour effectuer une séparation entre le biocide distribué et l'eau sortante.

10. Utilisation d'une source d'halogène libérant un désinfectant gazeux dans l'espace de tête d'un réservoir d'eau pour contrôler le développement de bactéries HPC dans l'eau se trouvant dans ledit réservoir, dans laquelle la source d'halogène est l'acide trichloroisocyanurique ou est choisie dans le groupe constitué par le dichloroisocyanurate de potassium, le dichloroisocyanurate de sodium, le phosphate trisodique chloré, l'hypochlorite de calcium, l'hypochlorite de lithium, la monochloramine, la dichloramine, le pentaisocyanurate de [(monotrichloro)-tétra-(monopotassium dichloro)], la 1,3-dichloro-5,5-diméthylidanotone, le paratoluène sulfodichloroamide, la trichloromélamine, la N-chloramine, le N-chlorosuccinimide, le N,N'-dichloroazodicarbonamide, la N-chloroacétylurée, le N,N-dichloroazodicarbonamide, la N-chloroacétylurée, le N,N-dichlorbiurile, le dicyandiamide chloré ou l'un de leurs mélanges.

11. Utilisation selon la revendication 10, dans laquelle la source d'halogène est l'acide trichloroisocyanurique.
